# FASCICULE DE BREVET EUROPEEN

(11) **EP 1 232 945 B1**
(45) Date de publication et mention de la délivrance du brevet: **03.08.2011**
(21) Numéro de dépôt: 02362002.4
(22) Date de dépôt: 12.02.2002
(51) Int. Cl.: B64D 15/04, B64C 1/40

(54) **Procédé de dégivrage d'un capot d'entrée d'air de moteur à réaction et dispositif pour sa mise en oeuvre**
Enteisungverfahren für die Lufteinlasshaube eines Strahltriebwerkes und Vorrichtung zur Durchführung des Verfahrens
Deicing method with forced circulation for jet engine intake fairing and device for the implementation of said method

(30) Priorité: 15.02.2001 FR 0102088
(43) Date de publication de la demande: 21.08.2002
(73) Titulaire: AIRBUS OPERATIONS (S.A.S), 31060 Toulouse (FR)
(72) Inventeur: Porte, Alain, 31770 Colomiers (FR); Pascal, Nathalie, 31770 Colomiers (FR); Chene, Gilles, 31300 Toulouse (FR); Montetagaud, Fabienne, 31700 Blagnac (FR)
(74) Mandataire: Maupilier, Didier

(56) Documents cités:
- EP-A- 0 823 547
- EP-A- 1 103 462
- EP-A1- 1 232 944
- US-A- 5 841 079

## Description

La présente invention concerne le dégivrage des capots d'entrée d'air de moteurs à réaction, notamment d'aéronefs.

Les exigences des autorités de certification et les règles sur le bruit imposées par les aéroports limitent les niveaux de bruit émis lors des décollages et des atterrissages. Le bruit généré par un avion de transport provient à la fois de la cellule et du moteur. Le bruit du moteur trouve son origine dans différentes sources, comme par exemple le bruit généré par la turbine ou par le compresseur ou le bruit généré par la soufflante.

Le bruit produit par le moteur est prépondérant sur le bruit généré par la cellule dans la phase de décollage car le moteur fonctionne en régime maximal.

Cette source de bruit est pénalisante. Par exemple, au-dessus d'une certaine valeur, l'avion ne sera autorisé à décoller ou à atterrir qu'à certaines heures bien précises non gênantes pour les communes avoisinantes.

C'est la raison pour laquelle certaines précautions sont désormais prises par les constructeurs aéronautiques et les motoristes pour diminuer les émissions sonores des moteurs installés sur les aéronefs.

Ainsi, des panneaux d'atténuation du bruit engendré par des moteurs d'aéronefs sont installés en certains emplacements de la nacelle, par exemple à l'entrée et à la sortie du canal de soufflante, ou encore sur les portes des inverseurs de poussée.

Par FR 2 261 583, on connaît un traitement acoustique pour une entrée d'air de moteur d'aéronef dans lequel le panneau acoustique est appliqué de manière asymétrique sur le canal de soufflante pour une suppression optimale du bruit.

Dans EP 0.823.547, afin d'optimiser encore plus l'atténuation acoustique, on préconise de rajouter des panneaux d'atténuation acoustique au niveau des bords d'attaque de la lèvre d'entrée d'air du capot.

Néanmoins, ces bords d'attaque sont soumis à des conditions de température et d'hygrométrie telles qu'il est courant que du givre s'y forme. La formation et l'accumulation de givre sur le bord d'attaque de la lèvre d'entrée d'air posent quelques problèmes. Si de gros morceaux de glace viennent à se rompre, ils pénètrent alors dans l'entrée d'air et sont ingérés par le moteur, risquant ainsi d'endommager des éléments dudit moteur et d'en diminuer les performances. De plus, l'accumulation de givre modifie les contours du bord d'attaque de la lèvre d'entrée d'air et génère des effets aérodynamiques indésirables.

Pour résoudre ces problèmes, des systèmes de dégivrage de bord d'entrée d'air ont été mis en place. Ils injectent de l'air chaud sous pression, prélevé sur le moteur, directement sur la peau de la surface interne de la lèvre d'entrée d'air pour prévenir de manière la plus efficace possible la formation et l'accumulation de givre durant les conditions d'utilisation normale du moteur.

Or, dans EP 0.823.547, des panneaux constitués d'un sandwich comprenant une structure alvéolaire du type nid d'abeilles flanquée, côté veine aérodynamique, d'une couche acoustiquement résistive et, du côté opposé, d'un réflecteur arrière, sont rajoutées à l'intérieur des bords d'attaques de la lèvre d'entrée d'air.

Ces panneaux d'atténuation acoustique rajoutés dans le bord d'attaque de la lèvre formant un écran et empêchent l'air chaud sous pression de réchauffer le bord d'attaque de ladite lèvre et de faire fondre le givre qui s'y est accumulé. Effectuer des vols commerciaux peut, sous certaines conditions climatiques, s'avérer dangereux.

Ainsi, le système de dégivrage conventionnel à injection d'air chaud sous pression ne peut être utilisé dans le contexte du traitement acoustique tel que décrit dans EP 0.823.547.

Par ailleurs, US 5.841.079 divulgue un panneau d'atténuation acoustique situé dans la lèvre d'entrée d'air et permettant le dégivrage de ladite lèvre. L'entrée d'air comporte une lèvre comprenant un panneau acoustique et un dispositif d'injection de fluide sous pression, ledit fluide ayant une température suffisante pour éviter la formation de givre sur la lèvre d'entrée d'air. Le panneau acoustique est conventionnel : une âme en nid d'abeilles en sandwich entre une couche poreuse et une couche de réflecteur acoustique. La couche poreuse et la couche de réflecteur acoustique sont toutes les deux percées de trous afin de permettre au fluide sous pression de traverser le panneau acoustique et de dégivrer la lèvre.

Or, la géométrie et les dimensions de l'entrée d'air sont adaptées aux performances du moteur. Celui-ci « voit » donc un débit d'air correspondant à l'entrée d'air.

Néanmoins, le dispositif décrit dans US 5.841.079 augmente, au travers desdits trous, le débit d'air ingéré par le moteur. Le moteur peut donc se trouver en face de débits d'air différents selon que le système de dégivrage est activé ou non. Ceci a une incidence sur ses performances, ce qui va à l'encontre de la volonté des motoristes qui définissent les performances de leurs moteurs par rapport à une géométrie d'entrée d'air fixe.

De plus, la confrontation dans les cellules de l'âme en nid d'abeilles des ondes sonores avec le fluide sous pression perturbe le fonctionnement du panneau acoustique, ce qui diminue les performances acoustiques dudit panneau.

L'invention vise à pallier les inconvénients et limitations des systèmes existants rappelés ci-dessus en proposant une solution permettant d'associer le système de dégivrage conventionnel à injection d'air chaud sous pression et l'adjonction dans le bord d'attaque de la lèvre d'entrée d'air d'un panneau d'atténuation acoustique.

A cet effet, l'invention a pour objet un procédé de dégivrage d'un capot d'entrée d'air d'un moteur à réaction, comprenant une lèvre d'entrée d'air, un système de dégivrage de la lèvre alimenté en fluide chaud sous pression et des moyens d'atténuation acoustique formant partie intégrante d'une zone déterminée de ladite lèvre, caractérisé en ce qu'il consiste à constituer lesdits moyens d'atténuation acoustique par des îlots séparés formés chacun d'un sandwich comprenant une couche poreuse acoustiquement résistive formant une partie de l'enveloppe externe du canal de soufflante délimité par ladite lèvre d'entrée d'air, une âme alvéolaire mono ou multicouche et un réflecteur, à envoyer dans la lèvre, de préférence en direction desdits îlots d'atténuation acoustique, le fluide chaud sous pression dudit système de dégivrage et à faire échapper ledit fluide à l'extérieur dudit capot, par un ou plusieurs orifices de forme et dimensions appropriées, ménagés dans ledit capot.

La fonction acoustique est réalisée par les îlots dont la surface poreuse se trouve exposée à l'écoulement aérodynamique et permet d'atténuer le bruit généré par le moteur.

La fonction dégivrante de la lèvre d'entrée d'air, notamment au droit du canal de soufflante, là où se trouve la structure d'atténuation acoustique, est efficacement réalisée par le flux de fluide chaud qui s'insinue dans les espaces entre îlots, avantageusement agencés pour définir entre eux des couloirs ou gorges plus ou moins rectilignes ou sinueux et convenablement orientés, en sorte de lécher directement la face interne, non recouverte par les îlots, de la paroi de la lèvre.

Un dégivrage efficace est ainsi assuré à hauteur de la paroi interne de la lèvre et sans rejet de fluide de dégivrage dans le canal de soufflante car là où le fluide lèche ladite paroi, il n'y a aucune communication avec l'extérieur de la lèvre, la paroi de cette dernière à cet endroit n'étant pas poreuse.

Un complément de dégivrage est apporté par ailleurs auxdites surfaces poreuses des îlots, lesquels baignent dans le flux chaud, par conduction au travers de la structure alvéolaire.

Les îlots peuvent avoir différentes structures et être constitués de bandes juxtaposées d'un matériau en nid d'abeilles ou de plots tubulaires juxtaposés perpendiculairement à la paroi de la lèvre d'entrée d'air.

En variante, les îlots peuvent avoir un réflecteur commun les recouvrant tous et pourvus d'écopes canalisant l'air de dégivrage vers les espaces inter-îlots.

L'invention a également pour objet les capots d'entrée d'air obtenus par la mise en oeuvre du procédé décrit ci-dessus, notamment ceux qui vont être décrits ci-après à titre d'exemple d'illustration du procédé, et en regard des dessins annexés sur lesquels :
- Figure 1 est une vue schématique en perspective d'un moteur à réaction d'aéronef ;
- Figure 2 est une vue en coupe axiale de la structure d'entrée d'air du moteur de la figure 1 ;
- Figure 3a est une vue en perspective d'un secteur de la lèvre d'entrée d'air de la figure 1 équipé d'une structure d'atténuation acoustique à fonction dégivrante conforme à l'invention ;
- Figure 3b est une vue en coupe transversale partielle d'une lèvre d'entrée d'air du type de la figure 3a ;
- Figures 4a et 4b illustrent deux variantes de réalisation d'une structure d'atténuation acoustique selon l'invention utilisant un matériau en nid d'abeilles ;
- Figures 5a et 5b illustrent deux modes de réalisation d'une structure d'atténuation acoustique selon l'invention utilisant des plots tubulaires ;
- Figures 6a et 6b illustrent deux variantes de réalisation d'une lèvre d'entrée d'air selon la figure 3b ;
- Figure 7 est une vue de face en coupe d'une lèvre, perpendiculairement à l'axe du canal de soufflante, illustrant une variante de réalisation d'une structure combinant dégivrage et atténuation acoustique selon l'invention ;
- Figure 8 est une vue en perspective et en coupe suivant la ligne VIII-VIII de la structure de la figure 7, et
- Figure 9 illustre une variante du dispositif de la figure 8.

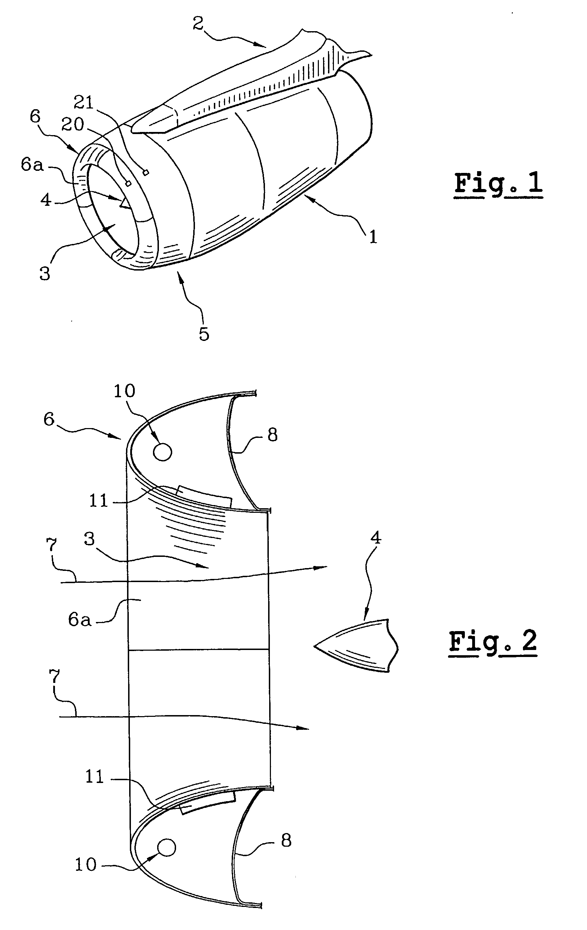

On a représenté en figure 1 un turboréacteur d'aéronef comprenant une nacelle 1 entourant coaxialement le moteur proprement dit et fixé par exemple à une aile (non représentée) de l'aéronef par l'intermédiaire d'un mât désigné d'une manière générale par la référence numérique 2.

La nacelle 1 a une section annulaire et définit entre elle et la partie centrale du moteur un canal annulaire 3 dit de soufflante. On a représenté en 4 sur la figure le nez en forme d'ogive de la soufflante entraînée par le moteur et qui est placée à l'entrée du canal.

La partie avant de la nacelle définit un capot d'entrée d'air 5 qui a pour fonction d'assurer l'écoulement aérodynamique de l'air, d'une part, vers le canal de soufflante 3 et, d'autre part, vers l'extérieur de la nacelle 1.

Comme on peut l'observer sur la figure 2 qui est une coupe axiale partielle du capot 5, ce dernier se prolonge à l'avant par une lèvre d'entrée d'air 6 présentant en section la forme d'un U ouvert vers l'arrière. Cette lèvre assure le partage de l'air entre la partie 7 qui pénètre dans le canal de soufflante et la partie qui s'écoule autour de la nacelle.

L'arrière de la lèvre 6 est fermé par une cloison interne 8.

Comme illustré schématiquement sur la figure 2, l'invention vise à combiner un dégivrage de la lèvre 6, en particulier de sa paroi délimitant l'entrée du canal de soufflante 3, à l'aide d'un système conventionnel habituellement à air chaud sous pression acheminé dans l'espace annulaire délimité par la lèvre et une atténuation acoustique sur le pourtour interne de la lèvre. Le système de dégivrage est par exemple constitué d'une tubulure annulaire symbolisée en 10, pourvue d'une pluralité d'orifices d'éjection ou d'un système équivalent, également connu et formé d'injecteurs à une ou plusieurs buses d'injection.

Conformément à l'invention, on munit notamment la paroi de la lèvre 6 tournée vers le canal de soufflante 3 d'une structure d'atténuation acoustique du type sandwich constitué d'une âme alvéolaire ou analogue, flanquée, d'un côté, d'une couche poreuse acoustiquement résistive et, de l'autre côté, d'un réflecteur total, ladite structure étant symbolisée en 11 sur la figure 2 et s'étendant de préférence circulairement sur tout le pourtour interne de la lèvre.

La lèvre 6 est généralement constituée de quatre tronçons ou secteurs de 90°, comme représenté sur la figure 1, aboutés à l'aide d'éclisses.

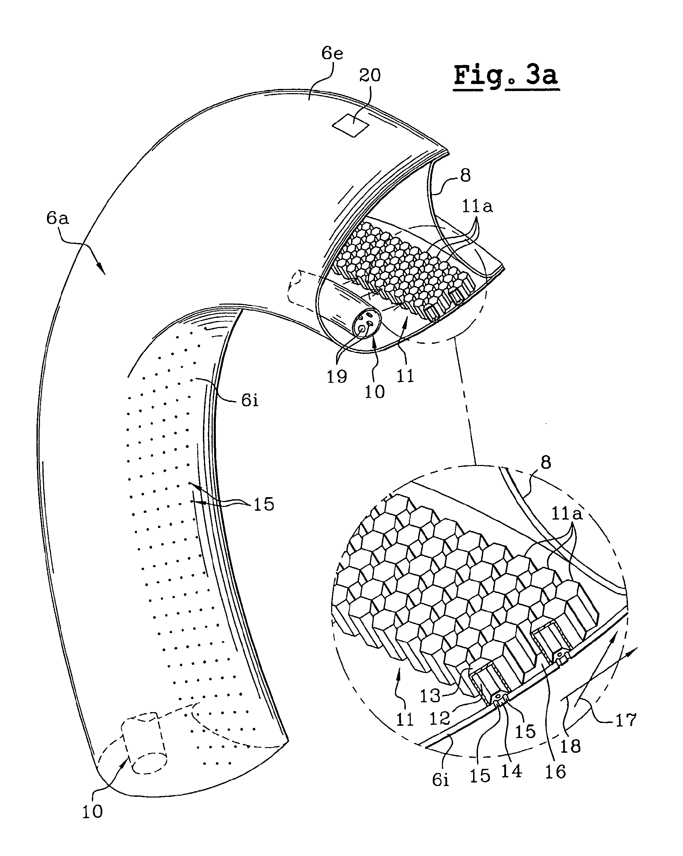

La figure 3a représente en perspective l'un de ces secteurs, 6a, équipé d'une structure d'atténuation acoustique 11 selon un premier mode de réalisation.

La structure d'atténuation acoustique 11 est constituée d'îlots en forme de bandes 11a disposées en parallèle avec un espacement entre elles déterminé, dans une zone annulaire de la lèvre (6a) coaxiale au canal de soufflante 3, et s'étendant d'un bout à l'autre du secteur 6a.

Dans le mode de réalisation représenté en figure 3a, chaque bande-îlot 11a d'atténuation acoustique est rapportée et fixée, à l'aide de moyens appropriés dont des exemples seront donnés plus loin, sur la face intérieure de la paroi interne 6i de la lèvre, dans une zone en forme de bande d'une largeur déterminée.

Chaque bande-îlot 11a comprend une âme centrale alvéolaire 12 du type nid d'abeilles, les axes des alvéoles étant perpendiculaires à la paroi 6i de la lèvre.

Les alvéoles 12 sont fermés, côté intérieur de la lèvre, par une couche ou peau 13 formant réflecteur total et, de l'autre côté, par une partie 14 de la paroi 6i qui est rendue poreuse par exemple par perçage de trous représentés en 15 sur la partie agrandie de la figure 3a, la référence 15 indiquant sur l'autre partie de la figure simplement l'emplacement de chaque groupe de trous de chaque alvéole 12.

Entre les parties 14 de la paroi 6i de la lèvre s'étendent des parties16 correspondant aux intervalles entre bandes 11a et qui ne sont pas ajourées.

La zone de la paroi 6i de la lèvre en regard de la structure d'atténuation acoustique 11 s'étend par exemple entre la tubulure 10 d'amenée de l'air chaud sous pression de dégivrage et la cloison interne 8.

Les bandes 11a sont avantageusement disposées en oblique en sorte que les espaces entre bandes forment des couloirs ou gorges dont la direction (flèche 17) n'est pas perpendiculaire à la cloison 8.

En d'autres termes, l'axe 17 des bandes 11a forme un angle par rapport à l'axe du canal de soufflante 3 symbolisé par la flèche 18 sur la figure 3a. Une telle orientation des bandes procure un meilleur mélange du flux circulant à l'intérieur de la lèvre et une meilleure qualité d'échange thermique.

La tubulure 10 est percée à la manière connue d'orifices 19, éventuellement pourvus de buses d'injection, répartis le long de la tubulure et orientés vers les zones à dégivrer.

Ces orifices 19 dirigent l'air de dégivrage notamment vers les couloirs entre bandes 11a qui le canalisent en le forçant à lécher la face interne des parties 16 de la paroi 6i de la lèvre.

L'air s'échappe ensuite vers l'atmosphère extérieure à la manière conventionnelle, c'est à dire par l'intermédiaire d'une ou plusieurs ouvertures, par exemple en forme de fentes dont les nombres et dimensions ainsi que leur distribution sur le pourtour externe du capot 5 peuvent varier.

On a représenté sur la figure 3a en 20 une telle ouverture de rejet à l'extérieur de la lèvre.

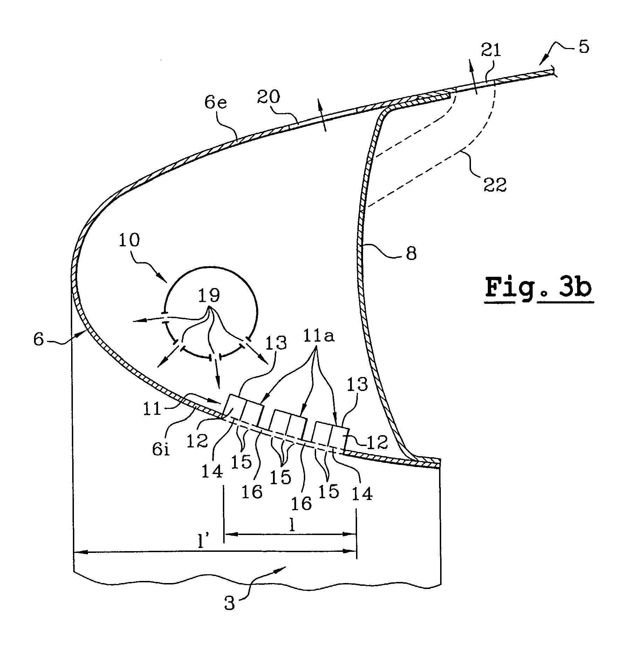

Sur la figure 3b qui est une coupe transversale schématique d'une lèvre d'entrée d'air 6 du type de la figure 3a, on a représenté en section trois bandes 11a disposées en oblique et couvrant une zone de largeur I de la paroi 6i entre la tubulure 10 et la cloison 8.

Cette zone peut être élargie jusqu'au bord avant extrême de la lèvre 6 pour atteindre une largeur l' en sorte d'améliorer l'atténuation acoustique sans pour autant dégrader le dégivrage.

On a schématisé en 20 sur la figure 3b une ouverture ménagée dans la paroi externe 6e de la lèvre pour rejeter à l'extérieur de cette dernière, à l'opposé du canal de soufflante 3, l'air de dégivrage.

En 21, est schématisé en variante une ouverture ménagée plus en aval dans le capot 5 pour rejeter l'air de dégivrage en provenance de l'intérieur de la lèvre 6 via un conduit 22 traversant la cloison 8.

Dans les dispositifs illustrés par les figures 3a et 3b, non seulement une fonction d'atténuation acoustique est réalisée par les bandes d'atténuation 11a mais un dégivrage convenable de la paroi interne 6i de la lèvre est également assuré, à la fois directement dans les parties 16 et indirectement dans les parties 14, par conduction à travers la structure alvéolaire 12.

Ce dégivrage est assuré sans rejet d'air dans le canal de soufflante 3 puisque l'air n'accède pas aux parties 14 et est rejeté à l'extérieur du capot 5.

Les dimensions des alvéoles des structures 12, notamment la hauteur, peuvent bien entendu varier.

Les structures 12 sont monocouches ou multicouches c'est à dire à résonateurs superposés, séparés ou non par des septums.

En fonction de la conductibilité des matériaux utilisés, les intervalles entre bandes 11a sont adaptés à la qualité de dégivrage désirée.

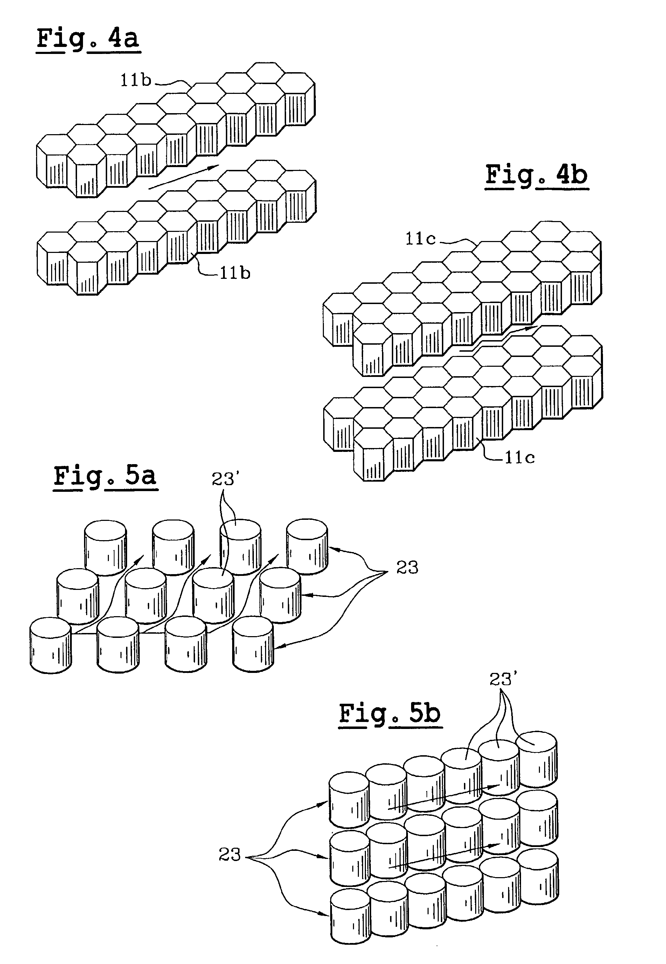

Les figures 4a et 4b illustrent des variantes de réalisation dans lesquelles les bandes-îlots ont des largeurs différentes, deux rangées d'alvéoles dans les bandes 11b de la figure 4a, trois rangées dans les bandes 11c de la figure 4b.

L'intervalle entre bandes est relativement important dans la figure 4a ou relativement étroit dans la figure 4b où la trajectoire de l'air de dégivrage dans les gorges est en zigzag comme indiqué par la flèche.

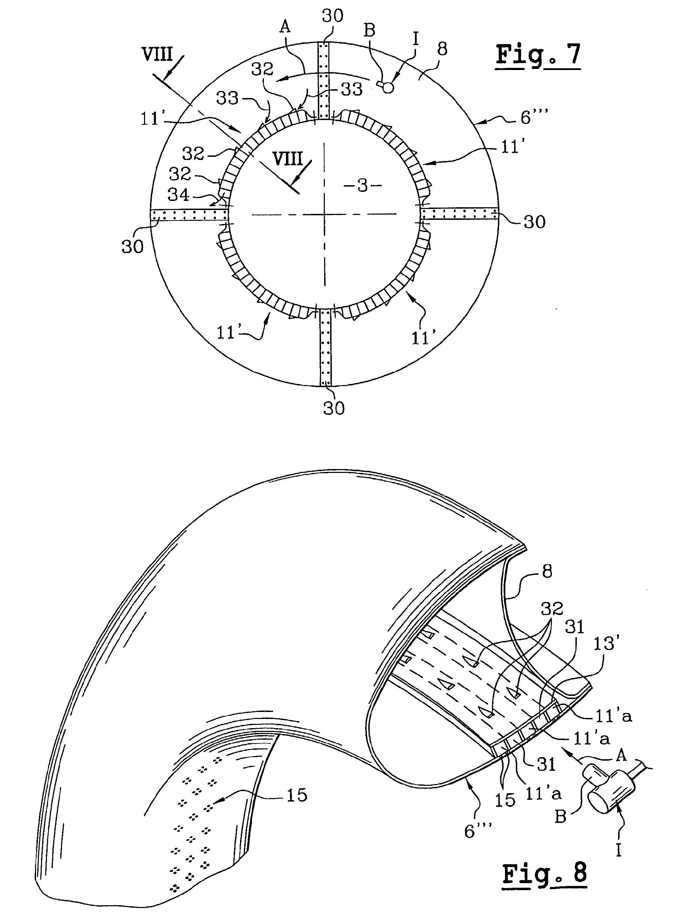

Au lieu d'une tubulure 10 annulaire s'étendant dans toute la lèvre 6, le système de dégivrage peut être constitué, également à la manière connue, d'un ou plusieurs injecteurs, débouchant dans la lèvre 6 en un ou plusieurs endroits et comportant chacun une ou plusieurs buses d'injection dirigeant l'air chaud suivant un trajet circulaire à l'intérieur de la lèvre, l'air s'échappant vers l'extérieur comme dans le cas de la tubulure 10. Un tel système est représenté schématiquement sur les figures 7 et 8 qui seront décrites plus loin.

Dans ce cas, l'orientation des bandes 11a est faite en tenant compte du sens de circulation de l'air de dégivrage à l'intérieur de la lèvre 6.

Les figures 5a et 5b illustrent deux modes de réalisation de la structure d'atténuation acoustique 11 sous forme d'îlots 23 constitués par des plots tubulaires isolés les uns des autres ou accolés, suivant toutes combinaisons possibles.

Les plots-îlots 23 sont par exemple de simples tubes cylindriques en matériaux compatibles du point de vue soudure ou brasage avec la lèvre 6. Les tubes sont fermés à une extrémité par une couche ou peau 23' formant réflecteur homologue du réflecteur 13 des bandes-îlots 11a. Ils sont rapportés et fixés sur la face interne de la paroi 6i de la lèvre aux endroits désirés, puis la partie de la paroi 6i en regard des tubes est percée comme les parties 14 de la figure 3a.

Ces plots-îlots 23, qui contiennent par exemple simplement de l'air, assurent ainsi la fonction d'atténuation acoustique. Les plots 23 peuvent bien entendu, comme les bandes 11a, constituer des résonateurs superposés séparés par des septums.

D'une manière analogue à celle décrite à propos des bandes-îlots 11a, l'air de dégivrage va s'insinuer entre les plots 23, comme illustré par les flèches sur les figures entre les plots individuels (figure 5a) ou entre les rangées de plots (figure 5b) qui sont par exemple orientées comme les bandes 11a de la figure 3a.

L'atténuation acoustique est assurée au droit des plots 23 et le dégivrage au droit des intervalles entre plots, ainsi qu'accessoirement par conduction au droit des plots.

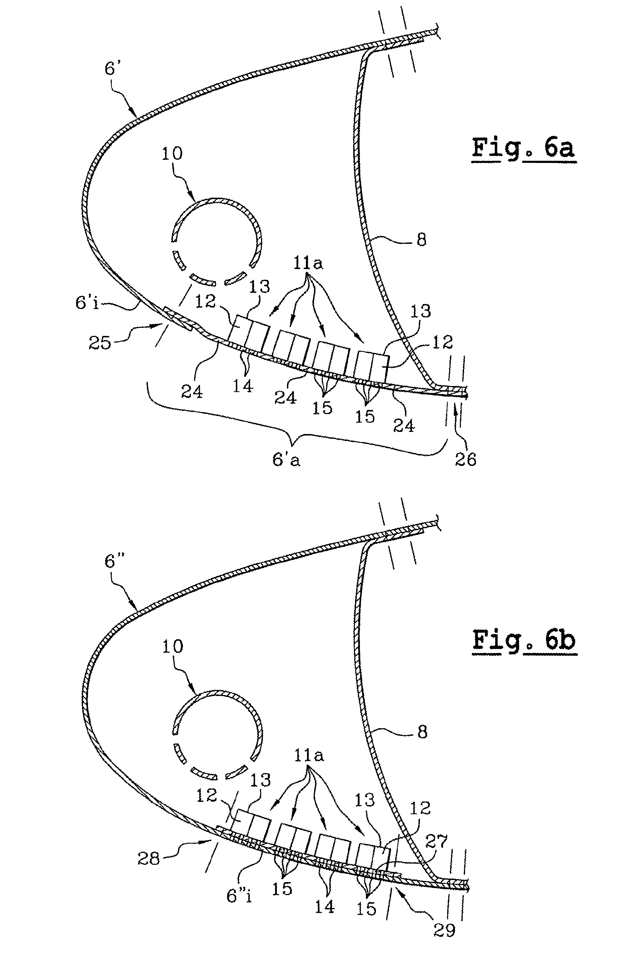

Les figures 6a, 6b illustrent deux autres modalités de constitution de la partie de la paroi 6i de la lèvre où s'opèrent les deux fonctions dégivrage/atténuation acoustique.

Alors que dans le cas de la figure 3b, la lèvre 6 est réalisée au préalable dans sa totalité puis percée aux endroits désirés, dans le mode de réalisation de la figure 6a, la lèvre 6' est réalisée partiellement c'est à dire sans la partie (6'a) de la paroi interne 6i intégrant la structure d'atténuation acoustique.

Cette partie 6'a est fabriquée à part et peut être constituée des mêmes éléments que ceux de la figure 3b excepté que la paroi 24 sur laquelle sont rapportés les éléments 12 et 13 homologues de ceux de la figure 3b, présente une forme annulaire et est rapporté et fixée, d'une part, sur son bord amont, sur la paroi 6i en 25 et, d'autre part, sur son bord aval, sur la cloison 8 en 26.

Les trous 15 dans la paroi 24, en regard des bandes-îlots 11a d'atténuation acoustique, sont percés avant mise en place de la partie 6'a.

Sur la figure 6b, la lèvre 6" est identique à celle de la figure 3b et la structure d'atténuation acoustique est formée d'un panneau complet, c'est à dire des bandes-îlots 11a comprenant chacune une âme centrale alvéolaire 12, un réflecteur 13 côté intérieur à la lèvre 6 et une couche 27 par exemple une feuille d'aluminium côté paroi interne 6"i de la lèvre.

L'ensemble est rapporté et fixé par soudage ou collage en 28 et 29 contre ladite paroi 6"i qui est, ensuite, ainsi que la feuille 27, percée de trous 15 en regard desdites bandes 11a.

Dans les divers modes de réalisation décrits ci-dessus, l'étendue de la zone à perforer de la paroi interne (6i, 6'i, 6"i) de la lèvre, ainsi que la dimension et la distribution des trous 15 dans la lèvre sont déterminées par ordinateur, à la manière connue, en fonction de différents paramètres liés à la fréquence caractéristique du bruit à atténuer, au type de moteur, à la nacelle, aux matériaux utilisés, ainsi qu'aux conditions de fonctionnement et d'utilisation du moteur et de l'aéronef. Le but recherché est d'obtenir le meilleur rapport entre le gain acoustique et la perte de surface dégivrée.

La structure alvéolaire 12 avec sa couche réflectrice 13, c'est à dire les bandes 11a, sont fixés sur la face interne de la lèvre, directement ou indirectement par l'intermédiaire d'une feuille métallique 27, par brasage, soudage ou collage à l'aide d'un adhésif selon la nature desdites bandes 11a et de la paroi de la lèvre. La structure alvéolaire est de préférence métallique, par exemple en acier inoxydable ou en aluminium.

La figure 7 est une vue de face et en coupe d'une lèvre 6''' constituée de quatre secteurs de 90° aboutés par des éclisses schématisées en 30.

La structure d'atténuation acoustique 11' est, suivant une variante représentée en perspective et en vue partielle sur la figure 8, constituée de bandes 11'a parallèles séparées par des couloirs 31 et comprenant chacune une âme centrale alvéolaire, un réflecteur 13', et une paroi poreuse délimitée par une partie de la paroi interne de la lèvre 6"', percée de trous 15.

Les bandes 11'a, sont, suivant cette variante, orthogonales à l'axe du canal de soufflante 3 c'est à dire parallèles à la cloison 8.

Par ailleurs, le réflecteur 13' est commun aux bandes 11'a et recouvre également les couloirs 31 séparant les bandes 11'a, cependant que ledit réflecteur 13' est muni au droit de chaque couloir 31 et le long de ce dernier, d'écopes 32 alignées et orientées dans le sens de circulation de l'air de dégivrage. Cet air est, dans le cas présent, introduit dans la lèvre 6"' à l'aide d'un ou plusieurs systèmes d'injection tels que celui symbolisé en I sur les figures 7 et 8 dont la ou les buses B sont dirigées tangentiellement à la lèvre en sorte d'imprimer à l'air une trajectoire circulaire (flèche A). L'air introduit dans les couloirs 31 par l'intermédiaire des écopes 32 comme illustré par les flèches 33 sur la figure 7, ressort à l'extrémité du tronçon de la structure 11', comme illustré par la flèche 34, au voisinage d'une éclisse 30.

L'air de dégivrage est rejeté à l'extérieur du capot d'entrée d'air comme dans le cas de la figure 3b, directement depuis la lèvre 6"', par une ou plusieurs ouvertures ou fentes telles que 20, ou indirectement par une ou plusieurs ouvertures ou fentes telles que 21.

Les structures d'atténuation acoustique 11'a peuvent bien entendu être constituées à l'aide de plots tubulaires, tels que les plots 23 des figures 5a, 5b recouverts par une peau commune, formant réflecteur et munie d'écopes en regard des espaces entre plots.

Les dimensions des parties formant résonateurs, leur disposition mutuelle et le taux de porosité des parties poreuses intégrées dans la paroi interne de la lèvre 6''', peuvent également varier dans de larges mesures, tout comme dans les divers modes de réalisation précédents.

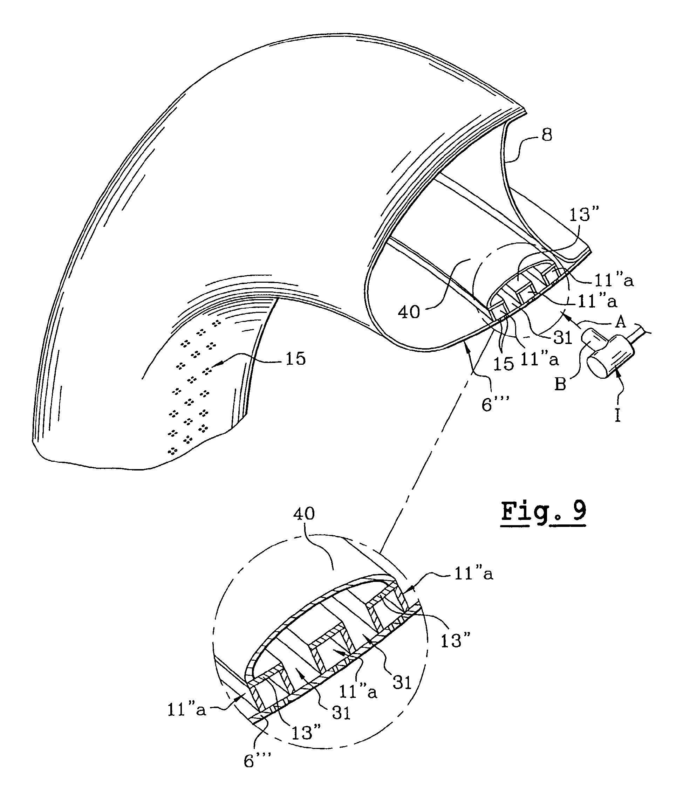

La figure 9 illustre une variante de réalisation de la figure 8 selon laquelle les bandes 11"a sont individuelles c'est-à-dire munies chacune d'un réflecteur 13", les couloirs 31 entre les bandes n'étant pas recouverts comme c'est le cas dans la figure 8.

Par contre, l'ensemble desdites bandes 11"a est recouvert d'une pièce 40 légèrement bombée fixée sur les bords latéraux du jeu de bandes, d'une extrémité à l'autre.

Par ailleurs, une ou plusieurs ouvertures sont ménagées dans la pièce 40 pour permettre à l'air (A) introduit dans la lèvre par la ou les buses B de pénétrer sous la pièce 40 qui canalise l'air vers les couloirs 31, l'air ressortant à l'extrémité de ces derniers et étant ensuite évacué hors de la lèvre comme dans les modes de réalisation précédents.

Les modes de réalisation des figures 7, 8 et 9 peuvent être mis en oeuvre en constituant, comme dans le dispositif de la figure 6a, la lèvre en deux parties dont l'une intègre la structure d'atténuation acoustique (11') et est rapportée sur l'autre pour définir la lèvre complète.

Il est enfin à noter que les bandes telles que 11a et les alignements tels que 23 sur la figure 5b peuvent être munis de saignées, passages ou couloirs transversaux pour améliorer encore les échanges.

## Revendications

1. Procédé de dégivrage d'un capot d'entrée d'air (5) d'un moteur à réaction, comprenant une lèvre d'entrée d'air (6,6',6",6"') un système de dégivrage (10, 1) de la lèvre alimenté en fluide chaud sous pression et des moyens d'atténuation acoustique (11, 11') formant partie intégrante d'une zone déterminée de ladite lèvre, **caractérisé en ce qu'**il consiste à constituer lesdits moyens d'atténuation acoustique par des îlots séparés (11 a, -11'a, 11 b, 11 c, 23) formés chacun d'un sandwich comprenant une couche poreuse acoustiquement résistive formant une partie de l'enveloppe externe (6i) du canal de soufflante (3) délimité par ladite lèvre d'entrée d'air, une âme alvéolaire mono ou multicouche et un réflecteur (13, 13'), à envoyer dans la lèvre, de préférence en direction desdits îlots d'atténuation acoustique, le fluide chaud sous pression dudit système de dégivrage et à faire échapper ledit fluide à l'extérieur dudit capot, par un ou plusieurs orifices (20, 21) de forme et dimensions appropriées, ménagés dans ledit capot (5).

2. Capot d'entrée d'air avec un dispositif de dégivrage, ledit capot (5) comprenant une lèvre d'entrée d'air (6, 6', 6", 6"'), un moyen (10, 1) d'injection dans la lèvre d'un fluide de dégivrage chaud sous pression, des moyens d'atténuation acoustique (11,11') formant partie intégrante d'une zone déterminée de ladite lèvre, et des moyens (20 à 22) d'évacuation à l'extérieur du capot du fluide de dégivrage, **caractérisé en ce que** lesdits moyens d'atténuation acoustique sont constitués par des îlots séparés (11a, 23) formés chacun d'un sandwich comprenant une couche poreuse acoustiquement résistive (14) formant une partie au moins de la paroi interne (6i,6'i,6"i) de la lèvre, une âme centrale alvéolaire (12) et un réflecteur (13, 13', 23').

3. Capot d'entrée d'air selon la revendication 2, **caractérisé en ce que** l'âme centrale (12) des îlots est une structure en nid d'abeilles.

4. Capot d'entrée d'air selon la revendication 3, **caractérisé en ce que** l'âme centrale des îlots est formée de plots tubulaires (23).

5. Capot d'entrée d'air selon les revendications 2 et 3, **caractérisé en ce que** les îlots séparés sont des bandes (11 a, 11 b, 11 c) formées d'au moins une rangée d'alvéoles disposées parallèlement.

6. Capot d'entrée d'air selon 1 revendications 2 et 4, **caractérisé en ce que** les îlots séparés sont des alignements de plots tubulaires juxtaposés (23), disposés parallèlement.

7. Capot d'entrée d'air selon l'une des revendications 2 à 6, **caractérisé en ce que** le réflecteur (13') des îlots est commun et muni d'écopes (32) communiquant avec des espaces (31) entre îlots, bordés par des parties non poreuses de la paroi de la lèvre (6"').

8. Capot d'entrée d'air selon l'une des revendications 2 à 6, **caractérisé en ce que** l'ensemble des îlots (11"a) est recouvert d'une pièce (40) canalisant le fluide de dégivrage vers les espaces (31) entre îlots.

9. Capot d'entrée d'air selon l'une des revendications 2 à 6, **caractérisé en ce que** lesdites bandes (11 a) ou alignements (23) sont en oblique par rapport à l'axe du canal de soufflante (3).

10. Capot d'entrée d'air suivant la revendication 9, **caractérisé en ce que** le fluide de dégivrage est distribué dans la lèvre (6, 6', 6") par une tubulure circulaire (10) munie d'orifices, d'éjection (19) convenablement orientés.

11. Capot d'entrée d'air selon l'une des revendications 2 à 8, **caractérisé en ce que** lesdits bandes (11'a) ou alignements sont orthogonaux à l'axe du canal de soufflante (3)

12. Capot d'entrée d'air selon l'une des revendications 7, 8 et 11, **caractérisé en ce que** le fluide de dégivrage est distribué dans la lèvre (6"') par un ou plusieurs dispositifs éjecteurs (1) créant un écoulement circulaire (A) du fluide dans la lèvre.

13. Capot d'entrée d'air suivant l'une des revendications 2 à 12, **caractérisé en ce que** la lèvre (6') est formée à partir de deux parties assemblées dont l'une (6'a) intègre la structure d'atténuation acoustique (11a).

## Claims

1. Method of deicing an air intake cowl (5) of a jet engine, comprising an air intake lip (6, 6', 6", 6"'), a system (10, 1) for deicing the lip, said system being supplied with hot pressurized fluid, and acoustic attenuation means (11, 11') forming an integral part of a defined region of said lip, **characterized in that** it consists in constituting said acoustic attenuation means by separate islands (11a, 11'a, 11b 11c, 23) each formed from a sandwich comprising an acoustically resistive porous layer forming a portion of the external envelope (6i) of the fan duct (3) bounded by said air intake lip, a monolayer or multilayer cellular core and a reflector (13, 13'), in sending into the lip, preferably directed towards said acoustic attenuation islands, the hot pressurized fluid of said deicing system and in making said fluid escape to the outside of said cowl, via one or more orifices (20, 21) of appropriate shape and size that are provided in said cowl (5).

2. Air intake cowl with a deicing device, said cowl (5) comprising an air inlet lip (6, 6', 6", 6"'), a means (10, I) for injecting a hot pressurized deicing fluid into the lip, acoustic attenuation means (11, 11') forming an integral part of a defined region of said lip, and means (20 to 22) for discharging the deicing fluid to the outside of the cowl, **characterized in that** said acoustic attenuation means are constituted by separate islands (11a, 23) each formed from a sandwich comprising an acoustically resistive porous layer (14) forming at least one portion of the internal wall (6i, 6'i, 6" i) of the lip, a cellular central core (12) and a reflector (13, 13', 23').

3. Air intake cowl according to Claim 2, **characterized in that** the central core (12) of the islands is a honeycomb structure.

4. Air intake cowl according to Claim 3, **characterized in that** the central core of the islands is formed from tubular studs (23).

5. Air intake cowl according to Claims 2 and 3, **characterized in that** the separate islands are strips (11a, 11b, 11c) formed from at least one row of cells arranged in a parallel fashion.

6. Air intake cowl according to Claims 2 and 4, **characterized in that** the separate islands are alignments of juxtaposed tubular studs (23), arranged in a parallel fashion.

7. Air intake cowl according to one of Claims 2 to 6, **characterized in that** the reflector (13') of the islands is common and provided with scoops (32) that communicate with spaces (31) between islands and are bordered by non-porous portions of the wall of the lip (6'").

8. Air intake cowl according to one of Claims 2 to 6, **characterized in that** the set of islands (11" a) is covered with a part (40) that channels the deicing fluid into the spaces (31) between islands.

9. Air intake cowl according to one of Claims 2 to 6, **characterized in that** said strips (11a) or alignments (23) are placed obliquely to the axis of the fan duct (3) .

10. Air intake cowl according to Claim 9, **characterized in that** the deicing fluid is delivered into the lip (6, 6', 6") by a circular nozzle (10) provided with suitably oriented ejection orifices (19).

11. Air intake cowl according to one of Claims 2 to 8, **characterized in that** said strips (11'a) or alignments are orthogonal to the axis of the fan duct (3).

12. Air intake cowl according to one of Claims 7, 8 and 11, **characterized in that** the deicing fluid is delivered into the lip (6"') by one or more ejector devices (I) creating a circular flow (A) of the fluid in the lip.

13. Air intake cowl according to one of Claims 2 to 12, **characterized in that** the lip (6') is formed from two assembled parts, one (5'a) of which incorporates the acoustic attenuation structure (11a).

## Patentansprüche

1. Verfahren zur Enteisung einer Lufteinlasshaube (5) eines Strahltriebwerks, die eine Lufteinlasslippe (6, 6', 6", 6"'), ein Enteisungssystem (10, I) der Lippe, das mit warmem Druckfluid versorgt wird, und Schalldämpfungseinrichtungen (11, 11') enthält, die integrierender Bestandteil einer bestimmten Zone der Lippe sind, **dadurch gekennzeichnet, dass** es darin besteht, die Schalldämpfungseinrichtungen aus getrennten Blöcken (11a, 11'a, 11b, 11c, 23) zu bilden, die je aus einem Sandwichverbund geformt sind, der eine schalldämmende poröse Schicht, die einen Teil der Außenhülle (6i) des von der Lufteinlasslippe begrenzten Gebläsekanals (3) formt, einen Ein- oder Mehrschiaht--Wabenkern und einen Reflektor (13, 13') enthält, in die Lippe, vorzugsweise in Richtung der Schalldämpfungsblöcke, das warme Druckfluid des Enteisungssystems zu schicken, und das Fluid durch eine oder mehrere in der Haube (5) ausgesparte Öffnungen (20, 21) geeigneter Form und Abmessungen aus der Haube nach außen abzuführen.

2. Lufteinlasshaube mit einer Enteisungsvorrichtung, wobei die Haube (5) eine Lufteinlasslippe (6, 6', 6", 6"'), eine Einrichtung (10, I) zum Injizieren eines warmen Enteisungsdruckfluids in die Lippe, Schalldämpfungseinrichtungen (11, 11'), die integrierender Bestandteil einer bestimmten Zone der Lippe sind, und Einrichtungen (20 bis 22) zur Abfuhr des Enteisungsfluids nach außerhalb der Haube enthält, **dadurch gekennzeichnet, dass** die Schalldämpfungseinrichtungen aus getrennten Blöcken (17.a, 23) bestehen, die je von einem Sandwichverbund geformt werden, der eine schalldämmende poröse Schicht (14), die mindesten einen Teil der Innenwand (6i, 5'i, 5"i) der Lippe formt, einen wabenförmigen zentralen Kern (12) und einen Reflektor (13, 13', 23') enthält.

3. Lufteinlasshaube nach Anspruch 2, **dadurch gekennzeichnet, dass** der zentrale Kern (12) der Blöcke eine Bienenwabenstruktur ist.

4. Lufteinlasshaube nach Anspruch 3, **dadurch gekennzeichnet, dass** der zentrale Kern der Blöcke von rohrförmigen Klötzchen (23) geformt wird.

5. Lufteinlasshaube nach den Ansprüchen 2 und 3, **dadurch gekennzeichnet, dass** die getrennten Blöcke Streifen (11a 11b 11c) sind, die von mindestens einer Reihe von parallel angeordneten Waben geformt werden.

6. Lufteinlasshaube nach den Ansprüchen 2 und 4, **dadurch gekennzeichnet, dass** die getrennten Blöcke fluchtende Anordnungen von parallel angeordneten, nebeneinander liegenden rohrförmigen Klötzchen (23) sind.

7. Lufteinlasshaube nach einem der Ansprüche 2 bis 6, **dadurch gekennzeichnet, dass** der Reflektor (13') der Blöcke allen gemeinsam und mit Leitblechen (32) versehen ist, die mit Zwischenräumen (31) zwischen Blöcken in Verbindung stehen, umrandet von nicht-porösen Teilen der Lippe (6"').

8. Lufteinlasshaube nach einem der Ansprüche 2 bis 6, **dadurch gekennzeichnet, dass** die Gesamtheit der Blöcke (11"a) von einem Bauteil (40) bedeckt wird, das das Enteisungsfluid zu den Zwischenräumen (31) zwischen Blöcken kanalisiert.

9. Lufteinlasshaube nach einem der Ansprüche 2 bis 6, **dadurch gekennzeichnet, dass** die Streifen (11a) oder fluchtenden Anordnungen (23) schräg bezüglich der Achse des Gebläsekanal (3) sind.

10. Lufteinlasshaube nach Anspruch 9, **dadurch gekennzeichnet, dass** das Enteisungsfluid in der Lippe (6, 6', 6") von einem kreisförmigen Rohrstutzen (10) verteilt wird, der mit entsprechend ausgerichteten Ausstofsöffnungen (19) versehen ist.

11. Lufteinlasshaube nach einem der Ansprüche 2 bis 8, **dadurch gekennzeichnet, dass** die Streifen (11'a) oder fluchtenden Anordnungen zur Achse des Gebläsekanals (3) orthogonal sind.

12. Lufteinlasshaube nach einem der Ansprüche 7, 8 und 11, **dadurch gekennzeichnet, dass** das Enteisungsfluid in der Lippe (6"') durch eine oder mehrere Ausstoßvorrichtungen (I) verteilt wird, die eine zirkulare Strömung (A) des Fluids in der Lippe erzeugen.

13. Lufteinlasshaube nach einem der Ansprüche 2 bis 12, **dadurch gekennzeichnet, dass** die Lippe (6') ausgehend von zwei zusammengebauten Teilen geformt wird, von denen einer (6'a) die Schalldämpfungsstruktur (11a) umfasst.
